# EUROPÄISCHE PATENTSCHRIFT

(11) **EP 0 739 480 B1**
(45) Veröffentlichungstag und Bekanntmachung des Hinweises auf die Patenterteilung: **26.08.1998**
(21) Anmeldenummer: 95902050.4
(22) Anmeldetag: 03.12.1994
(51) Int. Cl.: G01N 21/53

(54) **VORRICHTUNG ZUR DICHTE- UND KONZENTRATIONS-BESTIMMUNG VON SICHTBAREN BESTANDTEILEN IN FLUIDEN**
DEVICE FOR DETERMINING DENSITY AND CONCENTRATION OF VISIBLE CONSTITUENTS IN FLUIDS
DISPOSITIF DE DETERMINATION DE LA DENSITE ET DE LA CONCENTRATION DE CONSTITUANTS VISIBLES DE FLUIDES

(30) Priorität: 22.12.1993 DE 4343897
(43) Veröffentlichungstag der Anmeldung: 30.10.1996
(73) Patentinhaber: ROBERT BOSCH GMBH, 70442 Stuttgart (DE)
(72) Erfinder: STENGEL, Karl, D-73779 Deizisau (DE)
(86) Internationale Anmeldenummer: DE9401443
(87) Internationale Veröffentlichungsnummer: WO9517664

(56) Entgegenhaltungen:
- EP-A- 0 530 584
- DE-A- 2 318 968
- GB-A- 1 141 125
- US-A- 2 873 644
- IBM TECHNICAL DISCLOSURE BULLETIN, Bd.28, Nr.1, Juni 1985, NEW YORK US Seiten 331 - 332 'IMPROVED DETECTION OF CONTAMINATING PARTICLES IN FLUIDS'

## Beschreibung

### STAND DER TECHNIK

Die Erfindung betrifft eine Vorrichtung zur Dichte- und Konzentrations-Bestimmung von sichtbaren Bestandteilen in Fluiden, insbesondere zur Trübungsmessung von Kraftfahrzeugabgasen, nach der Gattung des Hauptanspruchs.

Ein derartiges Trübungsmeßgerät oder Opazimeter mißt die Schwächung eines Lichtstrahls durch eine vom zu messenden Fluid gefüllte bzw. durchströmte Meßkammer, wobei die Lichtschwächung als Maß für die Trübung genommen wird. Die Auswertung erfolgt gemäß dem Lambert-Beerschen Gesetz, das die Lichtschwächung beim Durchgang von absorbierenden Medien beschreibt. Die Anmelderin vertreibt ein derartiges Trübungsmeßgerät unter der Bezeichnung RTT 100/110, das zur Rauchgas- bzw. Rußmessung in Kraftfahrzeug-Abgasen dient. Der Nachteil der bekannten Anordnungen besteht darin, daß dieses Trübungsmeßverfahren bei Abgasen mit geringen Rußkonzentrationen, wie sie bei Motoren oder Verbrennungssystemen neuerer Bauart immer häufiger zu finden sind, versagen. Durch konstruktive oder verbrennungstechnische Maßnahmen wird die Rußemission so stark reduziert, daß die Genauigkeit der opazimetrischen Meßverfahren nicht mehr ausreicht. Der Grund für die begrenzte Genauigkeit bei niedrigen Rußkonzentrationen liegt im Prinzip des Meßverfahrens, welches auf einer Differenzmessung zwischen Hellsignal und abgeschwächtem Signal beruht, also einer Differenz zwischen zwei fast gleichgroßen Signalen.

Aus der GB 22 52 621 ist ein Streulichtmeßverfahren bekannt, bei dem ebenfalls zunächst ein Lichtstrahl in ein zu messendes Fluid geleitet wird. Der in verschiedenen Richtungen gestreute Lichtanteil wird erfaßt und ausgewertet. Bei Streulichtverfahren erhält man ein Meßsignal, welches der Konzentration des absorbierenden Mediums proportional ist. Dieses Streulichtverfahren eignet sich besonders für geringe Rußkonzentrationen, ist jedoch im Bereich höherer Konzentrationen dem opazimetrisichen Meßverfahren unterlegen.

Aus der US-A 2 873 644 sowie der DE-A-2 318 968 ist eine Trübungsmeßvorrichtung bekannt, die gleichzeitig eine Absorptions- und eine Streulichtmessung vorsieht. Vorgenommen wird eine Verhältnisbildung, deren Ergebnis in der US-A-2 873 644 als Rayleigh's Ratio bezeichnet wird. Eine separate Auswertung der von den beiden Lichtsensoren abgegebenen Signalen ist nicht vorgesehen.

### Vorteile der Erfindung

Die erfindungsgemäße Vorrichtung mit den Merkmalen des unabhängigen Anspruchs hat den Vorteil, daß die Vorteile der beiden bekannten Meßverfahren miteinander kombiniert werden, wobei eine einzige Meßkammer erforderlich ist und die Messungen beider Methoden gleichzeitig erfolgen können. Eine Normierungseinrichtung, die das von einem Lichtempfänger abgegebene Signal in Abhängigkeit von dem vom anderen Lichtempfänger abgegebenen Signal normiert stellt sicher, daß über den gesamten Meßbereich bei nur geringem höheren Aufwand insgesamt eine wesentlich höhere Genauigkeit erreichbar ist. Die erfindungsgemäße Vorrichtung ermöglicht die Messung von sehr hohen und sehr geringen Konzentrationen mit hoher Genauigkeit.

Durch die in den Unteransprüchen aufgeführten Maßnahmen sind vorteilhafte Weiterbildungen und Verbesserungen der im Hauptanspruch angegebenen Vorrichtung möglich.

Die Meßkammer ist zweckmäßigerweise als vom zu messenden Fluid während der Messung durchströmtes Meßrohr ausgebildet, wobei der erste Lichtempfänger und die Lichtquelle vorzugsweise an den beiden Stirnseiten des Meßrohrs angeordnet sind, um eine möglichst lange Meßstrecke zu erreichen.

Der zweite Lichtempfänger (Streulicht) ist in vorteilhafter Weise im wesentlichen mittig zwischen der Lichtquelle und dem ersten Lichtempfänger seitlich an der Meßkammer angeordnet, so daß das Streulicht in geringem Abstand erfaßt werden kann.

Um die Signale der beiden Lichtempfänger alternativ einer Anzeigevorrichtung zuführen zu können, weist die Auswerteeinrichtung vorzugsweise eine Umschalteinrichtung auf. Diese kann manuell umschaltbar ausgebildet sein oder automatisch gesteuert werden, wozu im letzteren Fall eine Steuereinrichtung besonders geeignet ist, die unterhalb eines vorgebbaren Meßsignalpegels des ersten Lichtempfängers durch Umschalten der Umschalteeinrichtung die Meßsignale des zweiten Lichtempfängers der Anzeigevorrichtung zuführt. Hierdurch ist sichergestellt, daß bei geringen Rußkonzentrationen die Messung mittels der Streulichtmethode erfolgt, die in diesem Bereich genauer arbeitet.

Es ist selbstverständlich auch möglich, beide Meßverfahren gleichzeitig einzusetzen, wobei in diesem Falle die Auswerteeinrichtung zwei Anzeigeeinrichtungen für die Signale der beiden Lichtempfänger aufweist. Hierdurch ist ein ständiger Vergleich der beiden Meßverfahren möglich.

Zur Durchführung von Korrelationsmessungen ist zweckmäßigerweise eine Vergleichseinrichtung für die Signale der beiden Lichtempfänger vorgesehen, um den Vergleich automatisch durchführen zu können.

### ZEICHNUNG

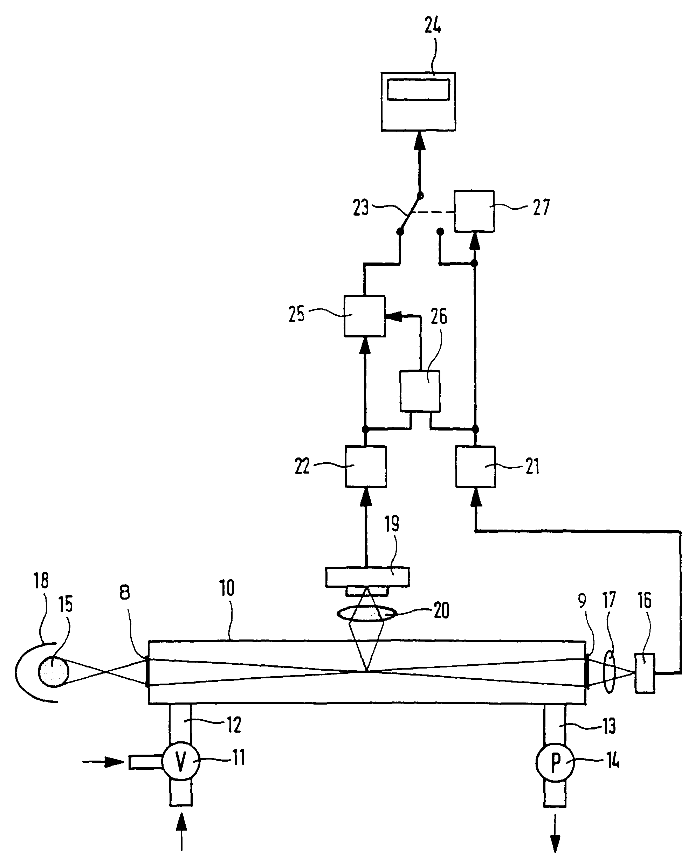

Ein Ausführungsbeispiel der Erfindung ist in der Zeichnung dargestellt und in der nachfolgenden Beschreibung näher erläutert. Die einzige Figur zeigt eine schematische Darstellung eines Meßrohrs und ein Blockschaltbild einer Auswerteeinrichtung.

### BESCHREIBUNG DES AUSFÜHRUNGSBEISPIELS

Ein als Meßkammer eingesetztes Meßrohr 10 besitzt seitlich an einem Endbereich einen mit einem Kalibrierventil 11 versehenen Einlaß 12 und am gegenüberliegenden Endbereich seitlich einen Auslaß 13, der mit einer Pumpe 14 verbunden ist.

An der einlaßseitigen Stirnseite des Meßrohrs 10 ist eine Lichtquelle 15 angeordnet, und an der gegenüberliegenden Stirnseite befindet sich ein erster Lichtempfänger 16, der üblicherweise ein Foto-Empfänger ist. Eine schematisch als Linse dargestellte Optik 17 bündelt den von der Lichtquelle 15 durch das Meßrohr 10 gesandten Lichtstrahl auf dem ersten Lichtempfänger 16. Eine schematisch als Reflektor dargestellte lichtquellenseitige Optik 18 dient zur Ausrichtung des Lichtstrahls durch das Meßrohr 10. An den Stirnseiten des Meßrohrs 10 gegebenenfalls noch erforderliche optische Elemente sind zur Vereinfachung nicht dargestellt. In bekannter Weise ist die optische Meßstrecke durch Meßfenster 8, 9 begrenzt. Bei einer Ausbildung der Lichtquelle 15 als Laserdiode kann eine Optik weitgehend oder ganz entfallen.

Zwischen der Lichtquelle 15 und dem ersten Lichtempfänger 16 ist seitlich außen am Meßrohr 10 ein zweiter Lichtempfänger 19 angeordnet, der Streulicht aus einem begrenzten Raumbereich erfaßt, wobei eine wiederum schematisch als Linse dargestellte Optik 20 das durch den Lichtstrahl im Meßrohr 10 erzeugte Streulicht dem zweiten Lichtempfänger 19 zuführt.

Die in den beiden Lichtempfängern 16, 19 erzeugten Meßsignale werden jeweils Signalaufbereitungsstufen 21, 22 zugeführt, die beispielsweise als Verstärker oder Pegelanpassungsstufen ausgebildet sein können. Weiterhin können derartige Signalaufbereitungsstufen Filter zur Ausblendung von Störsignalen oder von Grundrauschen aufweisen. Der Ausgang der Signalaufbereitungsstufe 21 ist über einen Umschalter 23 mit einer Anzeige- oder Datenerfassungsvorrichtung 24 verbunden, die im einfachsten Falle als digitales oder analoges Meßinstrument oder als Bildschirmanzeigevorrichtung ausgebildet sein kann. Der Ausgang der anderen Signalaufbereitungsstufe 22 ist über eine Normierungseinrichtung 25 ebenfalls mit dem Umschalter 23 verbunden, so daß mittels dieses Umschalters 23 alternativ die aufbereiteten Signale der beiden Lichtempfänger 16, 19 der Anzeigevorrichtung 24 zugeführt werden können.

Weiterhin sind die Ausgangssignale der Signalaufbereitungsstufen 21, 22 einer Vergleichseinrichtung 26 zugeführt, deren Ausgangssignal auf die Normierungseinrichtung 25 einwirkt. Das Ausgangssignal der Signalaufbereitungsstufe 21 ist zusätzlich einer Pegelsteuereinrichtung 27 zugeführt, durch die der Umschalter unterhalb eines vorgebbaren Signalpegels des Ausgangssignals der Signalaufbereitungsstufe 21 in die dargestellte Schaltstellung gebracht wird, in der die Anzeigevorrichtung 24 von Signalen des zweiten Lichtempfängers 19 beaufschlagt wird.

Zur Messung wird das zu messende Fluid, beispielsweise das Abgas eines Kraftfahrzeuges, durch das Meßrohr 10 geleitet, indem die Pumpe 14 bei geöffnetem Kalibrierventil 11 arbeitet. Hierzu wird beispielsweise das nicht dargestellte Auspuffrohr eines Kraftfahrzeuges mit dem Kalibrierventil 11 über einen Schlauch verbunden. Zum Nullpunktsabgleich wird das Kalibrierventil 11 in die Spülstellung umgeschaltet, so daß anstelle des Abgases ein Spülmedium durch die Meßkammer geleitet werden kann. Niederschläge auf den Meßfenstern können somit erfaßt und im Meßergebnis berücksichtigt werden.

Der von der Lichtquelle 15 zum ersten Lichtempfänger 16 gelangende Lichtstrahl durch das Meßrohr 10 wird in Abhängigkeit der Rußbestandteile im Abgas bzw. der Trübung des zu messenden Fluids mehr oder weniger geschwächt. Die Lichtabschwächung beim Durchgang durch absorbierende Medien wird gemäß dem Lambert-Beerschen Gesetz ausgewertet. Das in der Signalaufbereitungsstufe 21 ausgewertete Meßsignal gelangt über den Umschalter 23 zur Anzeige- oder Datenerfassungsvorrichtung 24 und zeigt dort den Grad der Trübung bzw. den Rußgehalt im Abgas an. Sinkt die Trübung unter einen vorgebbaren Wert ab, so spricht die Pegelsteuervorrichtung 27 an und schaltet den Umschalter 23 in die dargestellte Schaltstellung. Dadurch gelangen nunmehr Meßsignale des zweiten Lichtempfängers 19 zur Anzeige- oder Datenerfassungsvorrichtung 24. Durch den zweiten Lichtempfänger 19 wird das Streulicht erfaßt, das der Konzentration des absorbierenden Mediums proportional ist, also beispielsweise der Konzentration des Rußes im Abgas. Diese Meßmethode ist unterhalb einer vorgebbaren Trübung genauer als die opazimetrische Meßmethode durch den ersten Lichtempfänger 16.

Um vergleichbare Meßergebnisse zu erhalten, d. h. um den übergang zwischen den verschiedenen Meßmethoden kontinuierlich zu gestalten, werden die Ausgangssignale der beiden Signalaufbereitungsstufen 21, 22 einer Vergleichseinrichtung 26 zugeführt und steuern in Abhängigkeit dieses Vergleichs bzw. der jeweiligen Abweichung eine Normierungseinrichtung 25, durch die die aufbereiteten Signale des zweiten Lichtempfängers 19 an die des ersten Lichtempfängers 16 angepaßt werden. Dies kann beispielsweise dadurch erfolgen, daß die jeweiligen Meßkurven miteinander verglichen und einander angepaßt werden. Auf diese Weise können Korrelationsmessungen zwischen den beiden Verfahren durchgeführt werden. Grenzwerte, die einmal für das eine System ermittelt und festgelegt wurden, können damit auf das andere Meßverfahren übertragen werden. Durch die Kombination der Vergleichseinrichtung 26 mit der Normierungseinrichtung 25 können auch Korrekturen der jeweiligen Meßwerte bzw. Meßkurven durchgeführt werden. Hierzu kann im Einzelfall auch eine Normierungseinrichtung der Signalaufbereitungsstufe 21 nachgeschaltet werden.

Durch Hin- und Herschalten des Umschalters 23 können die Meßwerte beider Verfahren gleichzeitig auf der Anzeige- oder Datenerfassungsvorrichtung 24 angezeigt werden. Dies kann selbstverständlich auch dadurch erfolgen, daß beide Meßleitungen ohne Verwendung eines Umschalters 23 der Anzeige- bzw. Datenerfassungsvorrichtung 24 oder zwei getrennten Anzeige-/Datenerfassungseinheiten zugeführt werden.

Die beschriebene Auswerteeinrichtung kann vorzugsweise als Mikrorechner ausgebildet sein.

## Patentansprüche

1. Vorrichtung zur Dichte- und Konzentrationsbestimmung von sichtbaren Bestandteilen in Kraftfahrzeug-Abgasen, mit einer vom Abgas durchströmten Meßkammer (10), die an zwei gegenüberliegenden Stellen einen ersten Lichtempfänger (16) und eine Lichtquelle (15) mit einem auf den ersten Lichtempfänger (16) gerichteten Lichtstrahl aufweist, mit einem zweiten Lichtempfänger (19) zur Erfassung von Streulicht, der außerhalb seitlich des Strahlengangs durch die Meßkammer (10) angeordnet ist, und mit einer Auswerteeinrichtung, die die vom ersten und zweiten Lichtempfänger (16, 19) erzeugten Signale als Maß für die Dichte- und Konzentration auswertet, wobei die Auswerteeinrichtung die Signale vom ersten und zweiten Lichtempfänger (16, 19) unabhängig voneinander auswertet und eine Normierungseinrichtung zur Normierung des Signals des einen Lichtempfängers (16, 19) in Abhängigkeit des Signals des anderen Lichtempfängers (16, 19) vorgesehen ist.

2. Vorrichtung nach Anspruch 1, dadurch gekennzeichnet, daß die Meßkammer (10) als vom zu messenden Kraftfahrzeug-Abgas während der Messung durchströmtes Meßrohr ausgebildet ist.

3. Vorrichtung nach Anspruch 2, dadurch gekennzeichnet, daß der erste Lichtempfänger (16) und die Lichtquelle (15) an den beiden Stirnseiten des Meßrohrs (10) angeordnet sind.

4. Vorrichtung nach einem der Ansprüche 1 bis 3, dadurch gekennzeichnet, daß der zweite Lichtempfänger (19) im wesentlichen mittig zwischen der Lichtquelle (15) und dem ersten Lichtempfänger (16) seitlich an der Meßkammer (10) angeordnet ist.

5. Vorrichtung nach einem der vorhergehenden Ansprüche, dadurch gekennzeichnet, daß die Auswerteeinrichtung eine die Signale der beiden Lichtempfänger (16, 19) alternativ einer Anzeige- oder Datenerfassungsvorrichtung (24) zuführende Umschalteinrichtung (23) aufweist.

6. Vorrichtung nach Anspruch 5, dadurch gekennzeichnet, daß eine die Umschalteinrichtung (23) steuernde Steuereinrichtung (27) vorgesehen ist, die unterhalb eines vorgebbaren Meßsignalpegels des ersten Lichtempfängers (16) oder des zweiten Lichtempfängers (19) durch Umschalten der Umschalteinrichtung (23) das Meßsignal des zweiten Lichtempfängers (19) der Anzeige- oder Datenerfassungsvorrichtung (24) zuführt.

7. Vorrichtung nach Anspruch 5, dadurch gekennzeichnet, daß die Umschalteinrichtung (23) manuell umschaltbar ausgebildet ist.

8. Vorrichtung nach einem der Ansprüche 1 bis 4, dadurch gekennzeichnet, daß die Auswerteeinrichtung zwei Anzeige- oder Datenerfassungsvorrichtungen (24) oder eine Anzeige- oder Datenerfassungsvorrichtung (24) mit zwei Anzeigemöglichlichkeiten für die Signale der beiden Lichtempfänger (16, 19) aufweist.

9. Vorrichtung nach einem der vorhergehenden Ansprüche, dadurch gekennzeichnet, daß zur Durchführung von Korrelationsmessungen eine Vergleichseinrichtung (26) für die Signale der beiden Lichtempfänger (16, 19) vorgesehen ist.

10. Vorrichtung nach Anspruch 9, dadurch gekennzeichnet, daß die Normierungseinrichtung (25) durch die Vergleichseinrichtung (26) steuerbar ist.

## Claims

1. Device for determining the density and concentration of visible components in motor vehicle exhaust gases, having a measuring chamber (10) through which the exhaust gas flows and which, at two opposite points, has a first photodetector (16) and a light source (15) with a light beam directed at the first photodetector (16), having a second photodetector (19) for detecting scattered light which is arranged laterally outside the optical path through the measuring chamber (10), and having an evaluation device which evaluates the signals produced by the first and second photodetectors (16, 19) as a measure of the density and the concentration, the evaluation device evaluating the signals from the first and second photodetectors (16, 19) independently of one another, and a normalizing device for normalizing the signal of one photodetector (16, 19) as a function of the signal from the other photodetector (16, 19) being provided.

2. Device according to Claim 1, characterized in that the measuring chamber (10) is designed as a measuring tube through which the motor vehicle exhaust gas to be measured passes during the measurement.

3. Device according to Claim 2, characterized in that the first photodetector (16) and the light source (15) are arranged at the two ends of the measuring tube (10).

4. Device according to one of Claims 1 to 3, characterized in that the second photodetector (19) is arranged on the side of the measuring chamber (10), essentially midway between the light source (15) and the first photodetector (16).

5. Device according to one of the preceding claims, characterized in that the evaluation device has a switch-over device (23) which alternately feeds the signals from the two photodetectors (16, 19) to a display or data acquisition device (24).

6. Device according to Claim 5, characterized in that a control device (27) is provided which controls the switch-over device (23) and, below a predeterminable level of the measurement signal from the first photodetector (16) or the second photodetector (19), feeds the measurement signal from the second photodetector (19) to the display or data acquisition device (24) by switching over the switch-over device (23).

7. Device according to Claim 5, characterized in that the switch-over device (23) is designed so as to be manually switchable.

8. Device according to one of Claims 1 to 4, characterized in that the evaluation device has two display or data acquisition devices (24), or one display or data acquisition device (24) with two display facilities for the signals from the two photodetectors (16, 19).

9. Device according to one of the preceding claims, characterized in that a comparator device (26) for the signals from the two photodetectors (16, 19) is provided in order to carry out correlation measurements.

10. Device according to Claim 9, characterized in that the normalizing device (25) can be controlled by the comparator device (26).

## Revendications

1. Dispositif servant à déterminer la densité et la concentration de parties constitutives visibles dans des gaz d'échappement de véhicules à moteur, avec une chambre de mesure (10) parcourue par le gaz d'échappement qui présente en deux endroits opposés un premier récepteur de lumière (16) et une source de lumière (15) avec un rayon de lumière dirigé sur le premier récepteur de lumière (16), avec un second récepteur de lumière (19) pour la détection de lumière diffusée qui est disposé latéralement en dehors du trajet du rayon à travers la chambre de mesure (10), et avec un dispositif d'exploitation, qui exploite les signaux produits par le premier et par le deuxième récepteur de lumière (16, 19) comme mesure de la densité et de la concentration, le dispositif d'exploitation exploitant les signaux du premier et du deuxième récepteur de lumière (16, 19) indépendamment l'un de l'autre et un dispositif de normalisation étant prévu pour normaliser le signal de l'un des récepteurs de lumière (16, 19) en fonction du signal de l'autre récepteur de lumière (16, 19).

2. Dispositif selon la revendication 1,
caractérisé en ce que
la chambre de mesure (10) est constituée sous la forme d'un tube de mesure, parcouru par les gaz d'échappement à mesurer du véhicule à moteur pendant la mesure.

3. Dispositif selon la revendication 2,
caractérisé en ce que
le premier récepteur de lumière (16) et la source de lumière (15) sont disposés sur les deux faces frontales du tube de mesure (10).

4. Dispositif selon l'une des revendications 1 à 3,
caractérisé en ce que
le second récepteur de lumière (19) est disposé sensiblement au milieu entre la source de lumière (15) et le premier récepteur de lumière (16) est disposé latéralement sur la chambre de mesure (10).

5. Dispositif selon l'une des revendications précédentes,
caractérisé en ce que
le dispositif d'exploitation présente un dispositif de commutation (23) qui amène les signaux des deux récepteurs de lumière (16, 19) alternativement à un dispositif indicateur ou de saisie de données (24).

6. Dispositif selon la revendication 5,
caractérisé en ce que
l'on prévoit un dispositif de commande (27) qui commande le dispositif de commutation (23), dispositif de commande qui amène le signal de mesure du deuxième récepteur de lumière (19) du dispositif indicateur ou de saisie de données (24) en dessous d'un niveau du signal de mesure, qui peut être définie au préalable, du premier récepteur de lumière (16) ou du deuxième récepteur de lumière (19) en faisant basculer le dispositif de commutation (23).

7. Dispositif selon la revendication 5,
caractérisé en ce que
le dispositif de commutation (23) est constitué de façon à pouvoir être actionné manuellement.

8. Dispositif selon l'une des revendications 1 à 4,
caractérisé en ce que
le dispositif d'exploitation présente deux dispositifs indicateurs ou deux dispositifs de saisie de données (24) ou un dispositif indicateur ou dispositif de saisie de données (24) avec deux possibilités d'indication pour les signaux des deux récepteurs de lumière (16, 19).

9. Dispositif selon l'une des revendications précédentes,
caractérisé en ce que
pour réaliser des mesures de corrélation on prévoit un dispositif de comparaison (26) pour les signaux des deux récepteurs de lumière (16, 19).

10. Dispositif selon la revendication 9,
caractérisé en ce que
le dispositif de normalisation (25) peut être commandé par le dispositif de comparaison (26).
